# EUROPEAN PATENT SPECIFICATION

(11) **EP 4 528 440 B1**
(45) Date of publication and mention of the grant of the patent: **05.11.2025**
(21) Application number: 23198826.2
(22) Date of filing: 21.09.2023
(51) Int. Cl.: G06F 3/039, A47B 21/03

(54) **ROLLABLE MOUSE PAD**
AUFROLLBARES MAUSPAD
TAPIS DE SOURIS ENROULABLE

(43) Date of publication of application: 26.03.2025
(73) Proprietor: Dongguan Padmat Rubber Co., Ltd., Guangdong 523159 (CN)
(72) Inventor: ZHOU, Yu, GUANGDONG, 523159 (CN)
(74) Representative: 2K Patentanwälte Blasberg Kewitz & Reichel

(56) References cited:
- CN-A- 106 648 186
- US-A1- 2004 089 771
- US-A1- 2014 083 336

## Description

### BACKGROUND

### Technical Field

The disclosure relates to an art of mouse pad, particularly to a rollable mouse pad.

### Related Art

When using a computer, a mouse pad is usually placed on a table to provide for an operation of sliding to a mouse. For the comfort of use, a support is usually integrally formed on a front side of the mouse pad. However, it is difficult to fold the mouse pad because the support is integrally formed on the mouse pad. When packaging the mouse pad, the mouse pad has to be rolled up forward along the direction from the support, and then package it. This package by rolling method occupies a large space and lead to high transportation costs. Also, the support is undetachable and therefore leads to certain inconvenience when the support is not needed to be used.

Although an independent support is available at present, and the independent support is used in accompanied with an ordinary flat mouse pad, but consumers should purchase them separately. There is no structure for positioning the mouse pad and the support in an operation, and the support tends to shift and other adverse situations may be caused when using, so that it is inconvenient for using.

In view of this, the inventors have devoted themselves to the above-mentioned prior art, researched intensively and cooperated with the application of science to try to solve the above-mentioned problems. Finally, the invention which is reasonable and effective to overcome the above drawbacks is provided.

### SUMMARY

An object of the disclosure is to provide a rollable mouse pad, which is convenient to be packaged and the packaging size can be reduced to decrease the transportation costs.

To accomplish the above object, the disclosure provides a rollable mouse pad, which includes a pad body and a support. The support is disposed on the pad body. The support includes a bottom pad, a first support portion and a second support portion. The first support portion and the second support portion are tandem disposed on the bottom pad. A border portion is formed between the first support portion and the second support portion. In a packaged status, the support is folded along a center defined by the border portion, the first support portion and the second support portion are stacked with each other, and the pad body is rolled up to wrap the support.

The disclosure further has the following functions. It is convenient to package and the package volume is therefore reduced to effectively decrease the transportation costs. By a magnetically fixing of magnetic attraction structure, shifts are prevented when using the mouse so as to improve convenience in use.

### BRIEF DESCRIPTION OF THE DRAWINGS

FIG. 1 is an exploded view of the rollable mouse pad of the disclosure;
FIG. 2 is an assembled schematic view of the rollable mouse pad of the disclosure;
FIG. 3 is a schematic view of the support of the disclosure in the folding process;
FIG. 4 is a schematic view of the rollable mouse pad of the disclosure in the rolling process;
FIG. 5 is a schematic view of the rollable mouse pad of the disclosure after being rolled up;
FIG. 6 is a schematic view of another embodiment of the support of the disclosure; and
FIG. 7 is a schematic view of still another embodiment of the support of the disclosure.

### DETAILED DESCRIPTION

The technical contents of this disclosure will become apparent with the detailed description of embodiments accompanied with the illustration of related drawings as follows. It is intended that the embodiments and drawings disclosed herein are to be considered illustrative rather than restrictive.

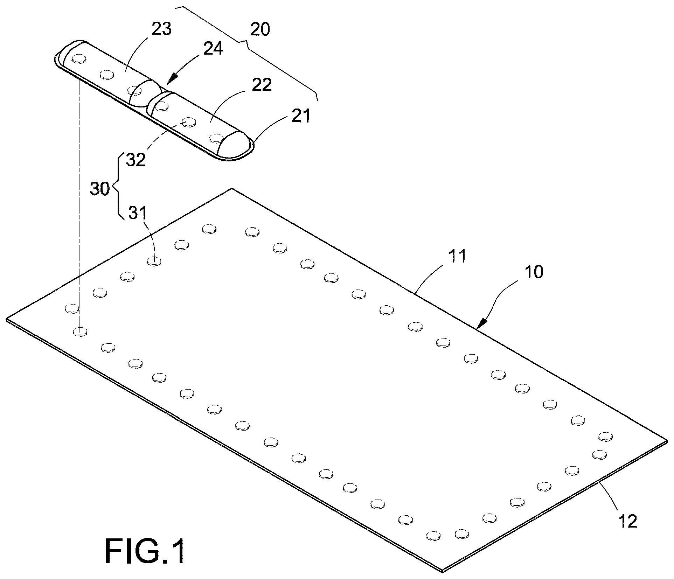

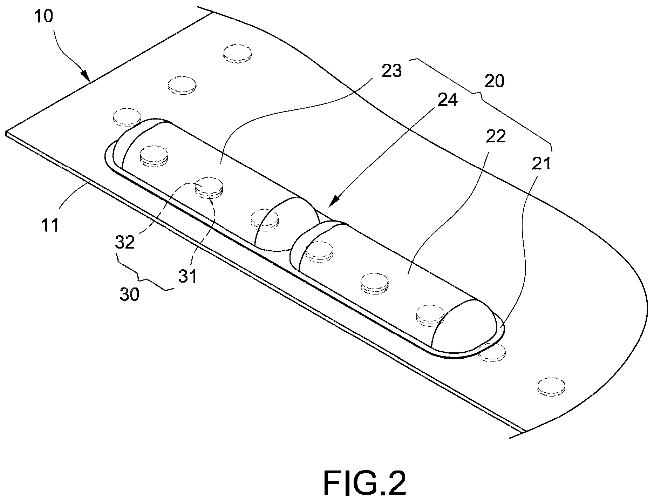

Please refer to FIGS. 1 and 2. The disclosure provides a rollable mouse pad, which includes a pad body 20 and a support 20.

The pad body 10 is made of a soft and flexible material and is of, but not limited to, a substantially rectangular shape, any other shapes are available. The pad body 10 of the embodiment has a pair of long edges 11 parallel to each other and a pair of short edges 12 parallel to each other. The long edges 11 and the short edges 12 are connected with each other.

The support 20 is disposed on the pad body 10. The support 20 includes a bottom pad 21, a first support portion 22 and a second support portion 23. The first support portion 22 and the second support portion 23 are tandem disposed on the bottom pad 21. A border portion 24 is formed between the first support portion 22 and the second support portion 23. The border portion 24 provides a user to place his or her wrist. The border portion 24 of the embodiment is a trench. The bottom pad 21 is made of a soft material and is of a flat shape. Each of the first support portion 22 and the second support portion 23 is a semi-ellipsoid, and the first support portion 22 and the second support portion 23 stacked with each other perform an ellipsoid.

In an embodiment, the support 20 is detachably connected on the pad body 10. The rollable mouse pad of the disclosure further includes a magnetic attraction structure 30 disposed between the pad body 10 and the support 20 so as to implement the abovementioned detachable connection.

In an embodiment, the magnetic attraction structure 30 includes multiple first magnetic attraction elements 31 and multiple second magnetic attraction elements 32. On inner sides of each long edge 11 and each short edge 12 is disposed with a part of the first magnetic attraction elements 31. The first magnetic attraction elements 31 are disposed at intervals. Each first magnetic attraction element 31 may be a magnet or a metal sheet and its shape may be a circular plate. The second magnetic attraction elements 32 are respectively disposed in the first support portion 21 and the second support portion 23 of the support 20. The second magnetic attraction elements 32 are arranged correspondingly to the first magnetic attraction elements 31 for magnetic attraction and fixing. Each second magnetic attraction element 32 may also be a magnet or a metal sheet and its shape may also be a circular plate.

In an embodiment, the support 20 may be selectively disposed at one side of the pad body 10 and adjustable according to a left-handed user or a right-handed user.

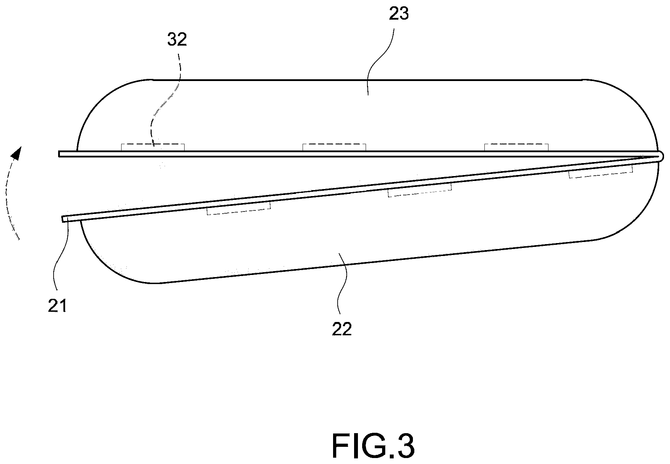

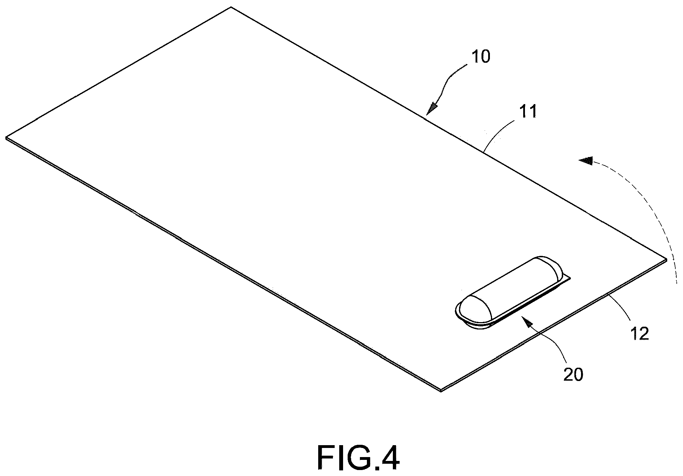

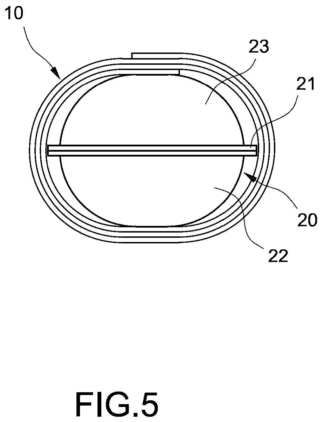

Please refer to FIGS. 3-5. In a packaged status, the support 20 is folded along a center defined by the border portion 24, the first support portion 22 and the second support portion 23 are stacked with each other to place the first support portion 22 and the second support portion 23 at the short edge 12 at an end of the pad body 10 and opposite to each other, and the pad body 10 is rolled up along the direction of the long edges 11 to wrap the support 20. The manner is convenient for packaging and the package occupies a small space so as to effectively decrease the transportation costs. The support 20 and the pad body 10 are magnetically attracted and fixed by the magnetic attraction structure 30 in an operation. The support 20 may be directly detached from the pad body 10 in case of an operation without the support 20. When using the support 20, the support 20 should be merely places on any side of the pad body 10, and then positioned by the magnetic attraction structure 30 to prevent the support 20 from moving in an operation of a mouse on the pad body 10 so as to improve convenience of operation.

In an embodiment, when the first support portion 22 and the second support portion 23 are staked with each other, each second magnetic attraction element 32 in the first support portion 22 is disposed between adjacent two of the second magnetic attraction elements 32 in the second support portion 23 (as shown in FIG. 3) to avoid repellence and being not easy to be superposed because of the same magnetic pole.

In an embodiment, an overall length of the support 20 with the first support portion 21 and the second support portion 22 stacked with each other is less than the length of the short edge 12 of the pad body 10 so that the support 20 will not be exposed from the pad body 10 when wrapped.

In an embodiment, the length of the long edge 11 of the pad body 10 is 800mm, the length of the short edge 12 is 300mm, and the length of the support 20 is 500mm. When the first support portion 22 and the second support portion 23 of the support 20 are stacked with each other, they can be placed at the left end of the pad body 10 and then perform wrapped by rolling the pad body 10 up along the direction of the long edge 11 of the pad body 10.

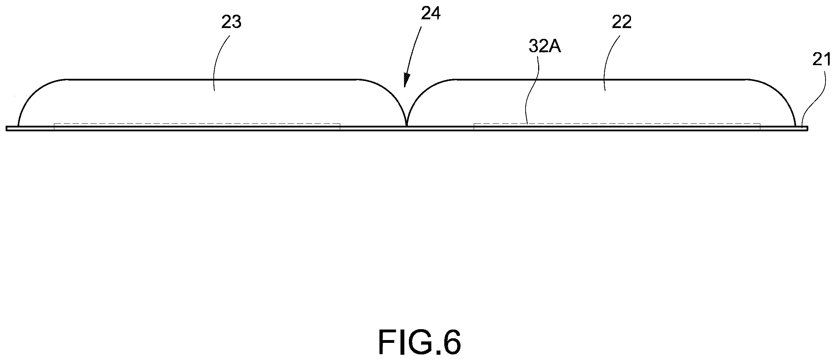

Please refer to FIG. 6. Besides the above embodiments, each second magnetic attraction element 32A of the magnetic attraction structure of the disclosure may be a strip-shaped plate. One of the second magnetic attraction elements 32A is embedded in the bottom pad 21 and the first support portion 22, and the other second magnetic attraction element 32A is embedded in the bottom pad 21 and the second support portion 23.

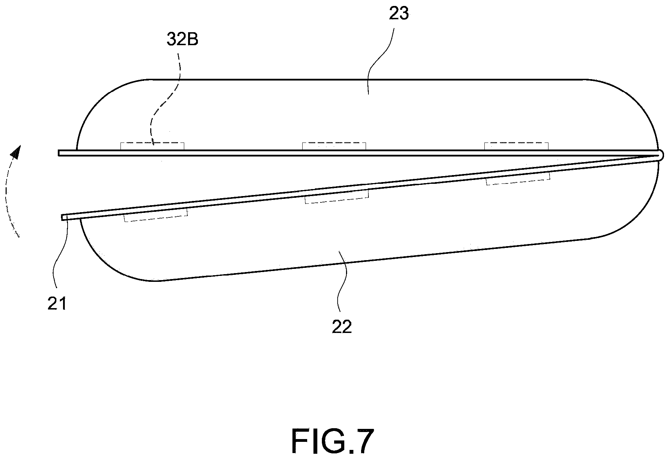

Please refer to FIG. 7. When each first magnetic attraction elements 31 is a metal sheet and each second magnetic attraction element 32B is a magnet, each second magnetic attraction element 32B in the first support portion 22 can be arranged correspondingly to each second magnetic attraction element 32B in the second support portion 23 and they generate magnetic attraction by the inversion of magnetic poles of each second magnetic attraction element 32B (i.e., the N-pole of each second magnetic attraction element 32B in the first support portion 22 faces downward, and the S-pole of each second magnetic attraction element 32B in the second support portion 23 faces downward).

## Claims

1. A rollable mouse pad comprising:
a pad body (10); and
a support (20), disposed on the pad body (10), the support (20) comprising a bottom pad (21), a first support portion (22) and a second support portion (23), the first support portion (22) and the second support portion (23) being tandem disposed on the bottom pad (21), and a border portion (24) being formed between the first support portion (22) and the second support portion (23);
wherein, in a packaged status, the support (20) is folded along a center defined by the border portion (24), the first support portion (22) and the second support portion (23) are stacked with each other, and the pad body (10) is rolled up to wrap the support (20).

2. The rollable mouse pad of claim 1, wherein the support (20) is detachably connected on the pad body (10).

3. The rollable mouse pad of claim 1, further comprising a magnetic attraction structure (30) disposed between the pad body (10) and the support (20).

4. The rollable mouse pad of claim 3, wherein the magnetic attraction structure (30) comprises multiple first magnetic attraction elements (31) and multiple second magnetic attraction elements (32) magnetically attractable with the first magnetic attraction elements 31 correspondingly, the first magnetic attraction elements (31) are arranged on the pad body (10) at intervals, and the second magnetic attraction elements (32) are respectively disposed in the first support portion (22) and the second support portion (23) and the second magnetic attraction elements (32) are arranged corresponding to the first magnetic attraction elements (31) respectively.

5. The rollable mouse pad of claim 4, wherein the pad body (10) comprises a pair of long edges (11) parallel to each other and a pair of short edges (12) parallel to each other, the long edges (11) and the short edges (12) are connected with each other, on an inner sides of each of the long edges (11) and the short edges (12) are disposed with a part of the first magnetic attraction elements (31) at intervals, and the support (20) is selectively fixed on one of the long edge (11) and the short edge (12).

6. The rollable mouse pad of claim 5, wherein an overall length of the first support portion (22) and the second support portion (23) of the support (20), which is folded, is less than a length of the short edge (12) of the pad body (10).

7. The rollable mouse pad of claim 4, wherein each second magnetic attraction element (32) in the first support portion (22) is disposed between adjacent two of the second magnetic attraction elements (32) in the second support portion (23) when the first support portion (22) is stacked on the second support portion (23).

8. The rollable mouse pad of claim 4, wherein the first magnetic attraction element (31) is a magnet or a metal piece.

9. The rollable mouse pad of claim 4, wherein the second magnetic attraction elements (32B) in the first support portion (22) are arranged corresponding to the second magnetic attraction elements (32B) in the second support portion (23) respectively when the first support portion (22) is stacked on the second support portion (23).

10. The rollable mouse pad of claim 1, further comprising a magnetic attraction structure (30), wherein the magnetic attraction structure (30) comprises multiple first magnetic attraction elements (31) and at least two second magnetic attraction elements (32A) magnetically attractable the first magnetic attraction elements (31) respectively, each second magnetic attraction element (32A) is a strip-shaped plate, one of the second magnetic attraction elements (32A) is disposed at the bottom pad (21) corresponding to the first support portion (22), and another second magnetic attraction of the elements (32A) is disposed at the bottom pad (21) corresponding to the second support portion (23).

## Patentansprüche

1. Ein aufrollbares Mauspad, umfassend:
einen Polsterkörper (10); und
einen Träger (20), der auf dem Polsterkörper (10) angeordnet ist, wobei der Träger (20) ein Bodenpolster (21), einen ersten Trägerabschnitt (22) und einen zweiten Trägerabschnitt (23) umfasst, wobei der erste Trägerabschnitt (22) und der zweite Trägerabschnitt (23) tandemförmig auf dem Bodenpolster (21) angeordnet sind, und ein Randabschnitt (24) zwischen dem ersten Trägerabschnitt (22) und dem zweiten Trägerabschnitt (23) ausgebildet ist;
wobei in einem verpackten Zustand der Träger (20) entlang einer durch den Randabschnitt (24) definierten Mitte gefaltet ist, der erste Trägerabschnitt (22) und der zweite Trägerabschnitt (23) miteinander gestapelt sind und der Polsterkörper (10) aufgerollt ist, um den Träger (20) zu umhüllen.

2. Das aufrollbare Mauspad nach Anspruch 1, wobei der Träger (20) lösbar mit dem Polsterkörper (10) verbunden ist.

3. Das aufrollbare Mauspad nach Anspruch 1, das ferner eine magnetische Anziehungsstruktur (30) umfasst, die zwischen dem Polsterkörper (10) und dem Träger (20) angeordnet ist.

4. Das aufrollbare Mauspad nach Anspruch 3, wobei die magnetische Anziehungsstruktur (30) mehrere erste magnetische Anziehungselemente (31) und mehrere zweite magnetische Anziehungselemente (32) umfasst, die mit den ersten magnetischen Anziehungselementen (31) entsprechend magnetisch anziehbar sind, wobei die ersten magnetischen Anziehungselemente (31) auf dem Polsterkörper (10) in Abständen angeordnet sind und die zweiten magnetischen Anziehungselemente (32) jeweils in dem ersten Trägerabschnitt (22) und dem zweiten Trägerabschnitt (23) angeordnet sind und die zweiten magnetischen Anziehungselemente (32) jeweils entsprechend den ersten magnetischen Anziehungselementen (31) angeordnet sind.

5. Das aufrollbare Mauspad nach Anspruch 4, wobei der Polsterkörper (10) ein Paar zueinander paralleler langer Kanten (11) und ein Paar zueinander paralleler kurzer Kanten (12) aufweist, die langen Kanten (11) und die kurzen Kanten (12) miteinander verbunden sind, auf einer Innenseite jeder der langen Kanten (11) und der kurzen Kanten (12) ein Teil der ersten magnetischen Anziehungselemente (31) in Abständen angeordnet ist und der Träger (20) selektiv an einer der langen Kanten (11) und der kurzen Kanten (12) befestigt ist.

6. Das aufrollbare Mauspad nach Anspruch 5, wobei eine Gesamtlänge des ersten Trägerabschnitts (22) und des zweiten Trägerabschnitts (23) des Trägers (20), der gefaltet ist, geringer ist als eine Länge der kurzen Kante (12) des Polsterkörpers (10).

7. Das aufrollbare Mauspad nach Anspruch 4, wobei jedes zweite magnetische Anziehungselement (32) in dem ersten Trägerabschnitt (22) zwischen zwei benachbarten zweiten magnetischen Anziehungselementen (32) in dem zweiten Trägerabschnitt (23) angeordnet ist, wenn der erste Trägerabschnitt (22) auf dem zweiten Trägerabschnitt (23) gestapelt ist.

8. Das aufrollbare Mauspad nach Anspruch 4, wobei das erste magnetische Anziehungselement (31) ein Magnet oder ein Metallteil ist.

9. Das aufrollbare Mauspad nach Anspruch 4, wobei die zweiten magnetischen Anziehungselemente (32B) in dem ersten Trägerabschnitt (22) entsprechend den zweiten magnetischen Anziehungselementen (32B) in dem zweiten Trägerabschnitt (23) angeordnet sind, wenn der erste Trägerabschnitt (22) auf dem zweiten Trägerabschnitt (23) gestapelt ist.

10. Das aufrollbare Mauspad nach Anspruch 1, ferner umfassend eine magnetische Anziehungsstruktur (30), wobei die magnetische Anziehungsstruktur (30) mehrere erste magnetische Anziehungselemente (31) und mindestens zwei zweite magnetische Anziehungselemente (32A) umfasst, die die ersten magnetischen Anziehungselemente (31) jeweils magnetisch anziehen können, jedes zweite magnetische Anziehungselement (32A) eine streifenförmige Platte ist, eines der zweiten magnetischen Anziehungselemente (32A) an der Bodenplatte (21) angeordnet ist, die dem ersten Trägerabschnitt (22) entspricht, und ein anderes zweites magnetisches Anziehungselement (32A) an der Bodenplatte (21) angeordnet ist, die dem zweiten Trägerabschnitt (23) entspricht.

## Revendications

1. Un tapis de souris enroulable, comprenant :
un corps de rembourrage (10) ; et
un support (20) disposé sur le corps de rembourrage (10), le support (20) comprenant un coussin de sol (21), une première partie de support (22) et une seconde partie de support (23), la première partie de support (22) et la seconde partie de support (23) étant disposées en tandem sur le coussin de sol (21), et une partie de bord (24) étant formée entre la première partie de support (22) et la seconde partie de support (23) ;
dans lequel, dans un état emballé, le support (20) est plié le long d'un centre défini par la partie de bord (24), la première partie de support (22) et la deuxième partie de support (23) sont empilées l'une sur l'autre, et le corps de rembourrage (10) est enroulé pour envelopper le support (20).

2. Le tapis de souris enroulable selon la revendication 1, dans lequel le support (20) est relié de manière amovible au corps de rembourrage (10).

3. Le tapis de souris enroulable selon la revendication 1, qui comprend en outre une structure d'attraction magnétique (30) disposée entre le corps de rembourrage (10) et le support (20).

4. Le tapis de souris enroulable selon la revendication 3, dans lequel la structure d'attraction magnétique (30) comprend une pluralité de premiers éléments d'attraction magnétique (31) et une pluralité de deuxièmes éléments d'attraction magnétique (32) qui peuvent être attirés magnétiquement avec les premiers éléments d'attraction magnétique (31) respectivement, dans lequel les premiers éléments d'attraction magnétique (31) sont espacés sur le corps de rembourrage (10) et les deuxièmes éléments d'attraction magnétique (32) sont respectivement disposés dans la première partie de support (22) et la deuxième partie de support (23) et les deuxièmes éléments d'attraction magnétique (32) sont respectivement disposés en correspondance avec les premiers éléments d'attraction magnétique (31).

5. Le tapis de souris enroulable selon la revendication 4, dans lequel le corps de rembourrage (10) comprend une paire de bords longs (11) parallèles l'un à l'autre et une paire de bords courts (12) parallèles l'un à l'autre, les bords longs (11) et les bords courts (12) sont reliés l'un à l'autre, sur un côté intérieur de chacun des bords longs (11) et des bords courts (12), une partie des premiers éléments d'attraction magnétique (31) est espacée, et le support (20) est fixé sélectivement à l'un des bords longs (11) et des bords courts (12).

6. Le tapis de souris enroulable selon la revendication 5, dans lequel une longueur totale de la première partie de support (22) et de la deuxième partie de support (23) du support (20) qui est plié est inférieure à une longueur du bord court (12) du corps de rembourrage (10).

7. Le tapis de souris enroulable selon la revendication 4, dans lequel chaque deuxième élément d'attraction magnétique (32) dans la première partie de support (22) est placé entre deux deuxièmes éléments d'attraction magnétique adjacents (32) dans la deuxième partie de support (23) lorsque la première partie de support (22) est empilée sur la deuxième partie de support (23).

8. Le tapis de souris enroulable selon la revendication 4, dans lequel le premier élément d'attraction magnétique (31) est un aimant ou une pièce métallique.

9. Le tapis de souris enroulable selon la revendication 4, dans lequel les deuxièmes éléments d'attraction magnétique (32B) sont disposés dans la première partie de support (22) en correspondance avec les deuxièmes éléments d'attraction magnétique (32B) dans la deuxième partie de support (23) lorsque la première partie de support (22) est empilée sur la deuxième partie de support (23).

10. Le tapis de souris enroulable selon la revendication 1, comprenant en outre une structure d'attraction magnétique (30), dans lequel la structure d'attraction magnétique (30) comprend une pluralité de premiers éléments d'attraction magnétique (31) et au moins deux seconds éléments d'attraction magnétique (32A) qui peuvent attirer magnétiquement les premiers éléments d'attraction magnétique (31), respectivement, chaque deuxième élément d'attraction magnétique (32A) est une plaque en forme de bande, l'un des deuxièmes éléments d'attraction magnétique (32A) est disposé sur la plaque de fond (21) correspondant à la première partie de support (22), et un autre deuxième élément d'attraction magnétique (32A) est disposé sur la plaque de fond (21) correspondant à la deuxième partie de support (23).
